(19) Europäisches Patentamt
European Patent Office
Office européen des brevets

(11) Publication number : **0 598 551 A2**

(12) **EUROPEAN PATENT APPLICATION**

(21) Application number : **93308982.3**

(51) Int. Cl.$^5$ : **G02B 1/04,** C08G 75/02

(22) Date of filing : **10.11.93**

(30) Priority : **16.11.92 AU PL5865/92**

(43) Date of publication of application :
**25.05.94 Bulletin 94/21**

(84) Designated Contracting States :
**AT BE CH DE DK ES FR GB GR IE IT LI LU MC NL PT SE**

(71) Applicant : **SOLA INTERNATIONAL HOLDINGS, LTD.**
**Sherriffs Road**
**Lonsdale, South Australia 5160 (AU)**

(72) Inventor : **Diggins, David Robert**
**Flat 5,**
**11 Erskine Street**
**Goodwood, South Australia 5034 (AU)**
Inventor : **Kloubek, Helena**
**18 Pedro Avenue**
**Morphett Vale, South Australia 5062 (AU)**
Inventor : **Toh, Huan Kiak**
**24 Medway Street**
**Fullerton, South Australia 5063 (AU)**

(74) Representative : **Pendlebury, Anthony et al**
**PAGE, WHITE & FARRER**
**54 Doughty Street**
**London WC1N 2LS (GB)**

(54) **Cross-linkable polymeric composition.**

(57) A cross-linkable polymeric casting composition including
approximately 35 to 85% by weight, based on the total weight of the casting composition, of an aromatic olefin monomer ; and
approximately 15 to 60% by weight of a di- or polythio compound.

EP 0 598 551 A2

The present invention relates to the manufacture of plastic optical articles such as video discs and ophthalmic lenses. The most widely used plastic ophthalmic lens material is polymerised diethylene glycol bis (allyl carbonate). This polymer has proved a satisfactory material for the manufacture of ophthalmic lenses because of a combination of features, including excellent transmission, resistance to discolouration, high strength and high impact resistance. The material has a reasonable abrasion resistance and can be coated to improve that resistance.

Lenses formed from polymers including divinyl benzene are generally brittle and have a high yellowness index.

In Australian Patent Application 81216/87, the entire disclosure of which is incorporated herein by reference, applicant describes a cross-linkable casting composition including at least polyoxyalkylene glycol diacrylate or dimethacrylate and at least one poly functional unsaturated cross-linking agent. Whilst the lenses produced from the prior art compositions provide advances in the art, difficulties may be encountered in certain applications. For example, difficulties may be encountered in some patients in fitting lenses made from such compositions. Eye discomfort, including eye fatigue problems, may be encountered. Moreover, such lenses have been found to be cosmetically unattractive.

Further, in Australian Patent Application 75160/91, the entire disclosure of which is incorporated herein by reference, applicant describes a polyoxy alkylene glycol diacrylate or dimethacrylate; a monomer including a recurring unit derived from at least one radical-polymerisable bisphenol monomer capable of forming a homopolymer having a high refractive index of more than 1.55; and a urethane monomer having 2 to 6 terminal groups selected from a group comprising acrylic and methacrylic groups.

Japanese Patent Application 63-309509 to Showa Denko KK discloses the formation of a prepolymer of divinyl benzene and a polythiol compound which may be used in the formation of optical materials with high refractive indexes.

Japanese Patent Applcation 90152702 to Mitsubishi Gas discloses a pentaerythritol triacrylate or methacrylate polymer with a minor amount, e.g. 10-30% by weight, of divinyl benzene in combination with pentaerythritol tetrabis (beta thiopropionate) u pentaerythritol tetra bis (thioglycolate). This polymer may be used to form optical lenses of high refractive index.

However, there remains a need in the prior art for optical articles of very high refractive indexes, very low densities and excellent colour, that still retain excellent mechanical properties.

Accordingly, it is an object of the present invention to overcome, or at least alleviate, one or more of the difficulties related to the prior art.

Accordingly, the present invention provides a cross-linkable polymeric casting composition including

approximately 35 to 85% by weight, based on the total weight of the casting composition, of an aromatic olefin monomer; and

approximately 15 to 60% by weight of a di- or polythio compound.

The aromatic olefin monomer may be a mono-, di- or tri- olefin monomer. An aromatic diolefin is preferred. The aromatic olefin monomer may include divinyl benzene or derivatives thereof. Divinyl benzene is preferred. Other aromatic olefins may be included as discussed below.

The aromatic olefin monomer may preferably be present in amounts of from approximately 40 to 60% by weight, based on the total weight of the casting composition.

The di- or polythiol compound may be of any suitable type. A di-, tri- or tetra polythiol compound may be used. A tri- or tetra-polythiol is preferred. The thiol may be selected from the following:

(a) Pentaerythritol Tetrakis (3-mercapto-propionate) [PTMP]

$$C(CH2\ O\ \underset{\underset{O}{\|}}{C}\ CH_2CH_2SH)_4$$

(b) Trimethylolpropane Tris (3-mercaptopropionate) [TTMP]

$$CH_3CH_2C(CH_2\ O\ \underset{\underset{O}{\|}}{C}\ CH_2CH_2SH)_3$$

(c) 4-mercaptomethyl-3,6-dithia-1,8-octanedithiol [MDO]

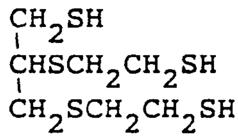

(d) Pentaerythritol Tetrakis (3-mercaptoacetate) [PTMA]

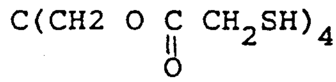

(e) Trimethylolpropane Tris (3-mercaptoacetate) [TTMA]

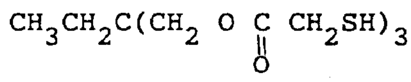

(f) 4-t-butyl-1,2-benzenedithiol

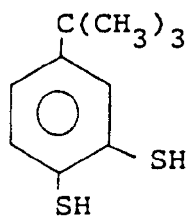

(g) 2-mercaptoethylsulfide

$HSCH_2CH_2SCH_2CH_2SH$

(h) 4,4'-thiodibenzenethiol

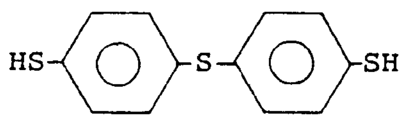

(i) benzenedithiol

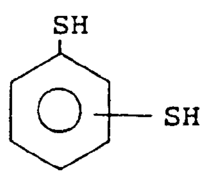

(j) Glycol Dimercaptoacetate

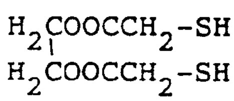

(k) Glycol Dimercaptopropionate Ethylene bis(3-Mercaptopropionate)

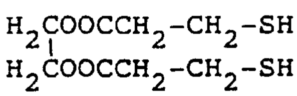

(l) Polyethylene Glycol Dimercaptoacetates

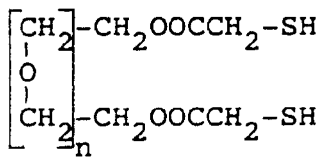

(m) Polyethylene Glycol Di(3-Mercaptopropionates)

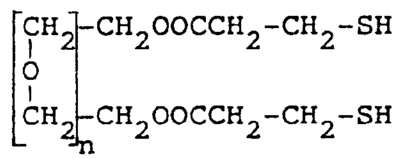

The thiol compound may preferably be present in amounts of from approximately 30 to 50% by weight, based on the total weight of the casting composition.

The crosslinkable polymeric casting composition according to the present invention may be utilised in the preparation of an optical article. The optical article may be characterised by being thinner and/or lighter than known prior art articles whilst retaining good abrasion resistance and impact resistance. The optical article may exhibit a high to very high refractive index, excellent colour and low density. Surprisingly, the polymeric article may also exhibit a very low Yellowness Index.

By the term "high refractive index", as used herein, we mean a polymer having a refractive index of at least approximately 1.55, preferably 1.57. By the term "very high refractive index" as used herein, we mean a polymer having a refractive index of approximately 1.59 or above, preferably 1.60 or above.

By "low density", as used herein, we mean a density in the range of approximately 1.15 to 1.25 g $cm^{-3}$.

The cross-linkable polymeric casting composition may optionally further include a polymerisable comonomer.

The polymerisable comonomer may be selected to improve the properties and/or processability of the cross-linkable polymeric casting composition. The polymerisable comonomer may be an unsaturated comonomer. The polymerisable comonomer may be selected from any suitable type, e.g. methacrylates, acrylates, vinyls, vinyl ethers, allyls, epoxides, and the like.

The polymerisable comonomer may preferably be selected from one or more of vinyls, allylics, polyoxyalkylene glycol di-, tri-, tetra- and higher acrylates or methacrylates, polymerisable bisphenol monomers capable of forming a homopolymer having a high refractive index of more than 1.55, urethane monomers having 2 to 6 terminal acrylic or methacrylic groups, fluorene diacrylates or dimethacrylates, and thiodiacrylate or dimethacrylate monomers.

Where a vinyl comonomer is included, the vinyl comonomer may be selected from styrene, substituted styrenes, 3,9-divinyl-2,4,8,10-tetraoxaspiro[5.5]undecane (DTU), and mixtures thereof. The vinyl comonomers may be present in amounts of from approximately 1 to 40% by weight, preferably approximately 5 to 30% by weight, based on the total weight of the casting composition.

Where a thiodiacrylate or dimethacrylate is included, the thiodiacrylate or dimethacrylates may be selected from bis(4-methacryloylthioethyl)sulfide (BMTES) and bis(4-methacryloylthiophenyl)sulfide (BMTS). The thiodiacrylate or dimethacrylate may be present in amounts of from approximately 1 to 40% by weight, preferably approximately 5 to 20% by weight, based on the total weight of the casting composition.

Where a fluorene diacrylate or methacrylate is included, the fluorene diacrylate or dimethacrylate monomer may be selected from a bisphenol fluorene dihydroxy acrylate (BFHA) or a bisphenol fluorene dimethacrylate (BFMA) or mixtures thereof.

The fluorene diacrylate or dimethacrylate monomer may be present in amounts of from approximately 1 to 35% by weight, preferably approximately 1 to 20% by weight.

The polyoxy alkylene glycol diacrylate or dimethacrylate compound according to the present invention, when present, may include ethylene oxide or propylene oxide repeating units in its backbone. A polyethylene glycol dimethacrylate is preferred. Suitable materials include dimethylacrylates where the number of repeating ethylene oxide groups is between 4 and 14.

The polyoxy alkylene glycol diacrylate or dimethacrylate component may be present in amounts of from approximately 1% by weight to 40% by weight, preferably approximately 5% to 20% by weight, based on the total weight of the casting composition.

The high index bisphenol monomer component in the cross-linkable casting composition when present may be selected from: dimethacrylate and diacrylate esters of bisphenol A; dimethacrylate and diacrylate esters of 4,4'bishydroxy-ethoxy-bisphenol A and the like.

Preferred high index bisphenol compounds include bisphenol A ethoxylated dimethacrylate and tetra brominated bisphenol A ethoxylated dimethacrylates.

The high index bisphenol monomer may be present in amounts of from approximately 1 to 40% by weight, preferably 5 to 25% by weight based on the total weight of the casting composition.

In a further aspect of the present invention the cross-linkable polymeric casting composition may further include at least one unsaturated cross-linking monomer having 3 or more polymerizable groups per molecule (polyfunctional).

The poly functional unsaturated cross-linking monomer according to the present invention may be a tri- or tetra- functional vinyl, an acrylic or methacrylic monomer. The cross-linking monomer may be a short chain monomer for example trimethylol propane trimethacrylate, pentaerythritol triacrylate or tetracrylate, or the like.

An ethoxylated trimethylol propane triacrylate has also been found to be suitable.

The poly functional unsaturated cross-linking monomer may be present in amounts of from 0 to approximately 40% by weight, preferably approximately 5 to 20% by weight based on the total weight of the casting composition.

The cross-linkable casting composition according to the present invention may include a polymerisation initiator. The polymerisation initiator may be a radical heat and/or ultraviolet (U.V.) cationic or radical initiator. A radical heat initiator is preferred. The compositions may be cured by a combination of UV radiation and/or heat. The combination of UV radiation and heat may reduce the possibility of incomplete curing for example due to the phenomenon known as "radical trapping".

The composition, with the addition of approximately 0.1% to 2.0% by weight of initiator may be exposed to UV radiation for between 0.5 and 10 seconds.

Any commercially viable UV curing system may be used. We have used a Fusion System with microwave driven lamps.

Typically 2 - 4 passes under the UV lamps plus an hour of heat treatment at 100°C completes the cure.

Heat curing can also be used without any use of U.V. radiation. The length of heat cure, may be between approximately 1 hour up to approximately 48 hours. Monomer filled moulds are placed in an oven. The oven is heated in accordance with a prescribed heating regime. Preferably curing time is between approximately 6 to 24 hours. Heating profiles depend upon the type of monomers to be cured and the initiators used to cure them.

The amount of initiation may vary with the monomers selected. It has been possible to operate with a relatively low level of initiator of between approximately 0.05 and 1.5%, preferably 0.4% to 1.0% by weight.

The following initiators have been found to be suitable.

- AIBN (Azo radical heat initiator) Azodiisobutyronitrile
- TX-29 (Dialkyl Peroxide radical heat initiator) 1,1-di-(-butyl peroxy-3,3,5-trimethyl cyclohexane)
- TBPEH (Alkyl Perester radical heat initiator) t-butyl per-2-ethylhexanoate
- (Diacyl Peroxide radical heat initiator) Benzoyl Peroxide
- (Peroxy Dicarbonate radical heat initiator) Ethyl Hexyl Percarbonate
- (Ketone Peroxide radical heat initiator) Methyl ethyl ketone peroxide
- Cyracure UV1-6974 (cationic photoinitiator) Triaryl sulfonium hexafluoroantimonate
- Lucirin TPO (radical photoinitiator) 2,4,6-Trimethylbenzoyldiphenylphosphine oxide
- Vicure 55 (radical photoinitiator) methyl phenylglyoxylate benzoic acid
- Bis(t-butyl peroxide) diisopropylbenzene
- t-butyl perbenzoate
- t-butyl peroxy neodecanoate

Initiator may be a single component or combination of initiator components.

Additionally, combination of photoiniator mixtures or photoinitiator mixtures with a heat induced free radical initiator such as peroxides, peroxypercabonates or an azo compound may also be employed.

Preferably, as an alternative to photo curing a heat curing agent may be used, for example 1,1 di-tert butyl peroxy-3,3,5-trimethylcyclohexane (TX-29) or a t-butyl per-2-ethylhexanoate (TBPEH).

Other additives may be present which are conventionally used in casting compositions such as inhibitors, dyes, UV stabilisers and materials capable of modifying refractive index. Mould release agents can be added but they are in general not required with the compositions used in the method of the present invention. Such additives may include:

UV Absorbers including

- Ciba Geigy Tinuvin P - 2(2'-hydroxy-5'methyl phenyl) benzotriazole
- Cyanamid Cyasorb UV 531 -2-hydroxy-4-n-octoxybenzophenone
- Cyanamid Cyasorb UV5411-2(2-hydroxy-5-t-octylphenyl)-benzotriazole
- Cyanamid UV 2098 - 2 hydroxy-4-(2-acryloyloxyethoxy) benzophenone
- National Starch and Chemicals Permasorb MA - 2 hydroxy-4-(2 hydroxy-3- methacryloxy)propoxy benzophenone
- Cyanamid UV24 - 2,2'-dihydroxy-4-methoxybenzophenone
- BASF UVINUL 400 - 2,4 dihydroxy-benzophenone
- BASF UVINUL D-49 - 2,2'-dihydroxy-4,4' dimethoxybenzophenone
- BASF UVINUL D-50 - 2,2', 4,4' tetrahydroxy benzophenone
- BASF UVINUL D-35-ethyl-2-cyano-3,3-diphenyl acrylate
- BASF UNINYL N-539-2-ethexyl-2-cyano-3,3-diphenyl acrylate
- Ciba Geigy Tinuvin 213

Hindered amine light stabilizers (HALS), including

- Ciba Geigy Tinuvin 765/292 - bis (1,2,2,6,6-pentamethyl-4-piperidyl)sebacate
- Ciba Geigy 770 - bis (2,2,6,6-tetramethyl-4-piperidinyl) sebacate

Antioxidants including

- Ciba Geigy Irganox 245 - triethylene glycol-bis-3-(3-tertbutyl-4-hydroxy-5-methyl phenyl)propionate
- Irganox 1010 -2,2-bis[[3-[3,4-bis(1,1-dimethylethyl)-4-hydroxypheryl]-1-oxopropoxy]methyl]-1,3-propanediyl 3,5-bis(1,1-dimethyl ethyl)-4-hydroxy benzene propanoate
- Irganox 1076 - octadecyl 3-(3',5'-di-tert-butyl(-4'-hydroxyphenyl) propionate

Anticolouring agents including

- Triphenyl phosphine
- 9, 10 dihydro-9-oxa-10-phosphaphenanthrene-1-oxide

Cure modifiers including

- Dodecyl mercaptan
- Butyl mercaptan
- Thiophenol
- Nitroso compounds such as Q1301 from Wako
- Nofmer from Nippon Oils and Fats

Other monomeric additives can be present in amounts up to 10% by weight as viscosity modifiers, and include monomers such as methacrylic acid, vinyl silanes, and other functional monomers. Other monomeric additives may be included to improve processing and/or material properties, these include:

- methacrylic acid, maleic anhydride, acrylic acid
- adhesion promoters/modifiers such as Sartomer 9008, Sartomer 9013, Sartomer 9015 etc.
- dye-enhancing, pH-adjusting monomers like Alcolac SIPOMER 2MIM
- a charge-reducing cationic monomer to render the material more antistatic, example Sipomer Q5-80 or Q9-75

In a further aspect of the present invention there is provided a polymeric article formed from a cross linkable casting composition as described above. The polymeric article may be an optical article. The optical article may provide characteristics equal to or greater than those achievable with articles made from diethylene glycol bis(allyl carbonate) but with a considerably reduced cure time and substantially increased throughout. The optical article may be further characterised by having reduced weight and/or thickness relative to the prior art, very low Yellowness Index and low density, whilst retaining good abrasion resistance and impact resistance.

The overall refractive index may be in the high to very high refractive index range of approximately 1.58 to 1.70, preferably 1.59 to 1.65.

The optical articles prepared by the method of this invention include camera lenses, ophthalmic lenses

and video discs.

The casting composition may be formed into a suitable article by mixing in a convenient vessel the components making up the material, and then adding the curing catalyst and/or photo-initiator. The mixed material is then degassed or filtered. As the curing time is substantially reduced the casting process may be undertaken on a continuous or semi-continuous basis.

The present invention will now be more fully described with reference to the accompanying examples. It should be understood, however, that the description following is illustrative only and should not be taken in any way as a restriction on the generality of the invention described above.

## EXAMPLE 1

A cross-linkable casting composition having the following components was prepared

| | % by weight |
|---|---|
| DVB (Divinyl Benzene) | 60% |
| PTMP (Pentaerythritol Tetrakis (3-mercapto-propionate) | 40% |

The monomer mix was prepared in a beaker together with 0.4% UV1-6974 as the U.V. initiator.

The casting material was used to fill the space between a pair of glass moulds separated by a plastic gasket at their periphery and held together by a clip. The mould was then passed 4 times under a U.V. lamp. This was followed by a 1 hour extended cure at 100°C.

## EXAMPLES 2 - 10

Example 1 was repeated under similar conditions with monomer mixes and U.V. initiators as designated in Table 1 below. The results achieved are also given in Table 1. Satisfactory lenses were achieved in each case.

## EXAMPLE 11

A cross-linkable coating composition having the following components was prepared

| | % by weight |
|---|---|
| DVB (divinyl benzene) | 66 |
| TTMP (trimethyl propene Tris 3-mercapto propionate) | 34 |

The monomer mix prepared in a beaker together with an additional 0.4% AIBN as radical heat initiator.

The coating material was used to fill the space between a pair of glass moulds separated by a plastic gasket at their periphery and held together by a clip.

The mould was then placed in an oven and heated for 12 hours at 100°C.

## EXAMPLES 12 - 23

Example 11 was repeated under similar conditions with monomer mixes and radical heat initiators as designated in Table 1 below. The results achieved are also given in Table 1. Satisfactory lenses were achieved in each case.

Example 20 is similar to Example 1 except cure is completed by heating the casting composition for 1 hour at 100°C in the presence of the radical heat initiator TX-29.

## COMPARATIVE EXAMPLES

### Comparative Example A

100% DVB
0.4% AIBN

Produces an extremely brittle lens. The lens shatters on opening of the mould. It was not possible to determine lens properties.

Comparative Example B

33% DVB
67% PTMP
0.4% AIBN

The stoichiometric ratio for thiolene reaction produces very soft flexible lens. It is not possible to determine lens properties.

TABLE 1

| Example | Density $gcm^{-3}$ | RI | YI | Taber 100 cyc. CR-39=10 | Barcol | Heat Defln |
|---|---|---|---|---|---|---|
| 1. DVB/PTMP 60/40 0.4% UV1-6974 | 1.19 | 1.61 | 1.06 | 19 | 27 | High |
| 2. DVB/PTMP 70/30 0.4% UV1-6974 | 1.16 | 1.61 | 0.7 | 25 | 38 | Med. |
| 3. DVB/TTMP 70/30 0.8% UV1-6974 | 1.14 | 1.60 | 1.09 | 22 | 20 | Med. High |

Table 1 continued

| Example | Density $gcm^{-3}$ | RI | YI | Taber 100 cyc. CR-39=10 | Barcol | Heat Defln |
|---|---|---|---|---|---|---|
| T4. DVB/PTMP/9G 50/30/20 0.4% UV1-6974 | 1.18 | 1.59 | - | 13 | 18 | Low Med. |
| 5. DVB/PTMP/ATM20 50/30/20 0.4% UV1-6974 | 1.17 | 1.60 | 0.8 | 27 | 34 | Low Med. |
| 6. DVB/PTMP/BMTES 50/30/20 0.4% UV1-6974 | 1.20 | 1.61 | 0.89 | 22 | 34 | Med. |
| 7. DVB/PTMP/ Styrene 50/30/20 0.4% UV1-6974 | 1.16 | 1.61 | 1.00 | 20 | 28 | High |
| 8. DVB/PTMP 66/34 0.4% Vicure 55 | 1.17 | 1.61 | 1.2 | - | 45 | Very Low |
| 9. DVB/PTMP/BFHA 50/30/20 0.1% TPO 0.4% 6974 | 1.20 | 1.61 | 1.0 | 10 | 35 | Low |
| 10. DVB/PTMP/9G 60/30/10 0.1 TPO 0.4% UV1 6974 | 1.17 | 1.60 | 1.2 | 13 | 21 | Low |

Table 1 continued

| Example | Density $gcm^{-3}$ | RI | YI | Taber 100 cyc. CR-39=10 | Barcol | Heat Defln |
|---|---|---|---|---|---|---|
| 11. DVB/TTMP 66/34 0.5% AIBN | 1.14 | 1.60 | 1.3 | - | 38 | Low |
| 12. DVB/MDO/DTU 60/20/20 0.5% AIBN | 1.17 | 1.61 | 1.12 | - | 18 | Med. |
| 13. DVB/PTMP/9G 60/30/10 0.4% TX-29 | 1.17 | 1.60 | 0.9 | 14 | 42 | Low |
| 14. DVB/PTMP/9G 60/30/10 1.0% TBPEH | 1.17 | 1.60 | 0.9 | 12 | 37 | Low - Med. |
| 15. DVB/MDO 70/30 0.4% TX-29 | 1.16 | 1.63 | 1.0 | 43 | 29 | Med. |
| 16. DVB/MDO/9G 60/30/10 1.0% TX-29 | 1.18 | 1.62 | 1.3 | 13 | 27 | Med-High |
| 17. DVB/TTMA/9G 60/30/10 1.0% TX-29 | 1.17 | 1.60 | 1.1 | 19 | 12 | High |
| 18. DVB/PTMA/9G 60/30/10 1.0% TX-29 | 1.19 | 1.60 | 2.4 | 19 | 50 | Med. |

Table 1 continued

| Example | Density $gcm^{-3}$ | RI | YI | Taber 100 cyc. CR-39=10 | Barcol | Heat Defln |
|---|---|---|---|---|---|---|
| 19. DVB/MDO/9G 60/20/20 1.0% TX-29 | 1.16 | 1.60 | 1.0 | 8 | 32 | Low-Med. |
| Dual Heat/Photoinitiation | | | | | | |
| 20. DVB/PTMP/9G 60/30/10 0.4% TX-29 0.2% V55 | 1.17 | 1.60 | 1.2 | 14 | 42 | Low-Med. |
| 21. DVB/PTMP/9G 50/40/10 1% TX29 | 1.21 | 1.59 | 1.2 | 9 | 31 | Med. |
| 22. DVB/PTMP/PTA 40/50/10 1% TX29 | 1.25 | 1.59 | 1.2 | 16 | 17 | High |
| 23. DVB/PTMP /U6HA/9G 50/40/5/5 | 1.21 | 1.59 | 0.9 | 9 | 35 | Med. |

9G 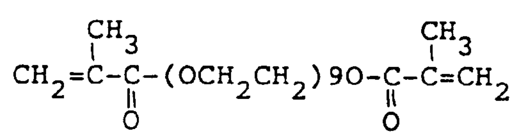

ATM20 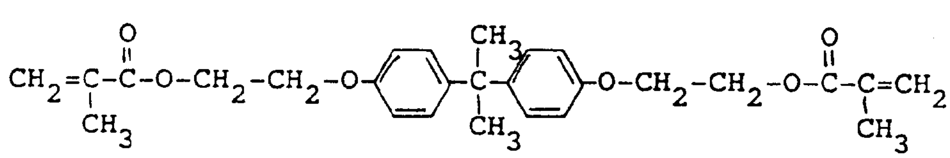

BMTES 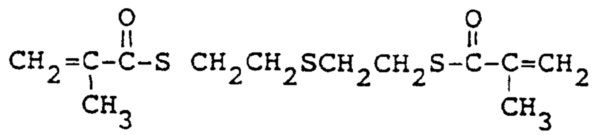

bis(4-methacryloylthioethyl)sulfide

DTU 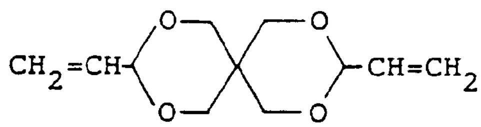

3,9-Divinyl-2,4,8,10-tetraoxaspiro[5,5]undecane

BFHA

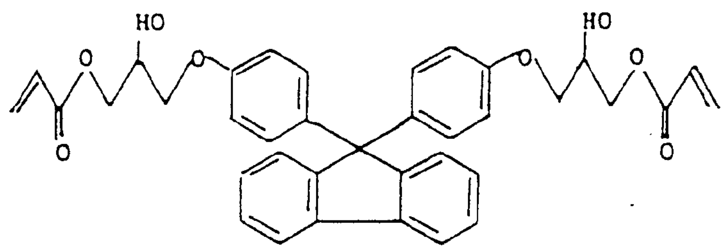

bisphenolfluorenedihydroxyacrylate

BMTS 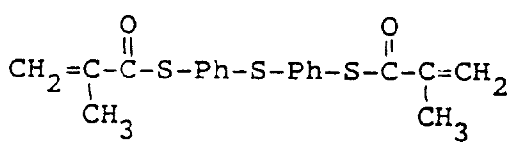

bis(4-methacryloylthiophenyl)sulfide

DAIP 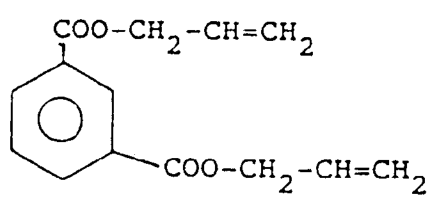

Diallyl isophthalate

## DESCRIPTION OF TESTS

### Taber

Apparatus used to assess the abrasion resistance of lens materials. It involves the use of an abrasive wheel rubbed across a lens surface. Degree of abrasion is assessed according to the level of haze induced by wear.

Vicat

Measure of the deflection of a lens material when subjected to a specified force at a fixed temperature.

Barcol

Measure of the hardness of a lens material. A fixed force is applied to a needle point. The depth of penetration indicates the degree of hardness.

Yellowness Index

A measure of the degree of yellowness as assessed by the Gardiner Colorimeter Model XL835.

## Claims

1. A cross-linkable polymeric casting composition including
approximately 35 to 85% by weight, based on the total weight of the casting composition, of an aromatic olefin monomer; and
approximately 15 to 60% by weight of a di- or polythio compound.

2. A casting composition according to claim 1, including
approximately 40 to 60% by weight, based on the total weight of the casting composition, of an aromatic olefin monomer including divinyl benzene; and
approximately 30 to 50% by weight of a tri- or tetra polythiol.

3. A casting composition according to claim 2, wherein the tri- or tetra polythiol is selected from the group consisting of
(a) Pentaerythritol Tetrakis (3-mercapto-propionate) [PTMP]

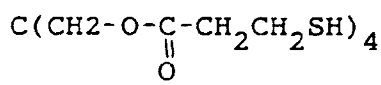

(b) Trimethylolpropane Tris (3-mercaptopropionate) [TTMP]

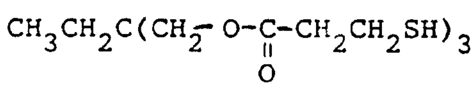

(c) 4-mercaptomethyl-3,6-dithia-1,8-octanedithiol [MDO]

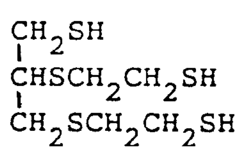

(d) Pentaerythritol Tetrakis (3-mercaptoacetate) [PTMA]

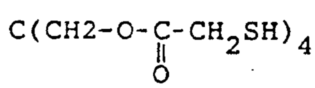

(e) Trimethylolpropane Tris (3-mercaptoacetate) [TTMA]

$$CH_3CH_2C(CH_2-O-\underset{\underset{O}{\|}}{C}-CH_2SH)_3$$

(f) 4-t-butyl-1,2-benzenedithiol

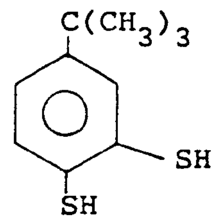

(g) 2-mercaptoethylsulfide

$HSCH_2CH_2SCH_2CH_2SH$

(h) 4,4'-thiodibenzenethiol

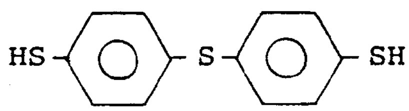

(i) benzenedithiol

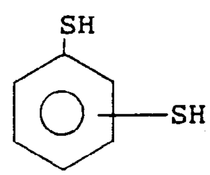

(j) Glycol Dimercaptoacetate

$$H_2COOCCH_2-SH$$
$$H_2COOCCH_2-SH$$

(k) Glycol Dimercaptopropionate Ethylene bis(3-Mercaptopropionate)

$$H_2COOCCH_2-CH_2-SH$$
$$H_2COOCCH_2-CH_2-SH$$

(l) Polyethylene Glycol Dimercaptoacetates

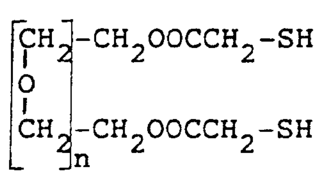

(m) Polyethylene Glycol Di(3-Mercaptopropionates)

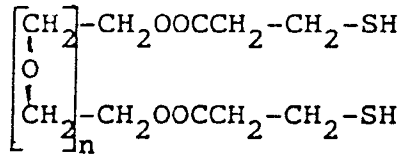

and mixtures thereof.

4. A casting composition according to claim 1, further including a polymerisable comonomer selected from the group consisting of vinyls, allylics, polyoxyalkylene glycol di-, tri-, tetra and higher acrylates or methacrylates, polymerisable bisphenol monomers capable of forming a homopolymer having a high refractive index of more than 1.55, urethane monomers having 2 to 6 terminal acrylic or methacrylic groups, fluorene diacrylates or dimethacrylates, and thiodiacrylate or dimethacrylate monomers, or mixtures thereof.

5. A casting composition according to claim 4, further including approximately 1 to 40% by weight of a polyethylene glycol dimethacrylate.

6. A casting composition according to claim 1, including approximately 1 to 40% by weight of a bisphenol A ethoxylated dimethacrylate.

7. A casting composition according to claim 1, including approximately 1 to 40% by weight of a thiodimethacrylate selected from the group consisting of bis(4-methacryloylthioethyl)sulfide (BMTES) and bis(4-methacryloylthiophenyl)sulfide (BMTS).

8. A casting composition according to claim 1, further including approximately 1 to 35% by weight of a fluorene diacrylate or dimethacrylate selected from the group consisting of a bisphenol fluorene dihydroxy acrylate or a bisphenol fluorene dimethacrylate, or mixtures thereof.

9. A casting composition according to claim 1, further including approximately 1 to 40% by weight of an aromatic olefin selected from the group consisting of styrene, substituted styrenes, 3,9-divinyl-2,4,8,10-tetraoxaspiro[5.5]undecane (DTU), or mixtures thereof.

10. A casting composition according to claim 1, further including approximately 0.1 to 2% by weight of a heat induced free radical initiator, photo initiator, or mixtures thereof.

11. A polymeric optical article formed from a casting composition according to any one of claims 1 to 10, and having a very high refractive index of approximately 1.58 to 1.70.